# EUROPEAN PATENT SPECIFICATION

(11) **EP 4 275 981 B1**
(45) Date of publication and mention of the grant of the patent: **05.08.2026**
(21) Application number: 22784109.5
(22) Date of filing: 07.04.2022
(51) Int. Cl.: B60W 50/16, B62D 1/04, B60K 35/25, G06F 3/01, G06F 3/0488, G06F 3/04883

(54) **MULTI-GESTURE INTERACTION TOUCH STEERING WHEEL CONTROL SYSTEM HAVING VIBRATION FEEDBACK**
BERÜHRUNGSLENKRADSTEUERUNGSSYSTEM MIT MEHRGESTENINTERAKTION UND VIBRATIONSRÜCKKOPPLUNG
SYSTÈME DE COMMANDE DE VOLANT TACTILE À INTERACTION MULTI-GESTE AYANT UNE RÉTROACTION DE VIBRATION

(30) Priority: 08.04.2021 CN 202110378461
(43) Date of publication of application: 15.11.2023
(73) Proprietor: Zhejiang Geely Holding Group Co., Ltd., Hangzhou, Zhejiang 310051 (CN); Ningbo Geely Automobile Research & Development Co. Ltd., Hangzhou Bay New District Ningbo 315336 (CN)
(72) Inventor: PENG, Fangqiang, Hangzhou, Zhejiang 310051 (CN); WANG, Ping, Hangzhou, Zhejiang 310051 (CN)
(74) Representative: Dai, Simin
(86) International application number: PCT/CN2022/085654
(87) International publication number: WO 2022/214043

(56) References cited:
- CN-A- 101 989 139
- CN-A- 101 989 139
- CN-A- 106 467 065
- CN-A- 106 467 065
- CN-A- 111 404 535
- CN-A- 113 085 550
- JP-A- 2016 199 081
- KR-A- 20180 074 872
- US-A1- 2018 273 050
- US-A1- 2019 102 082
- US-A1- 2020 257 364

## Description

### TECHNICAL FIELD

The present invention relates to the field of automobile steering wheel technology, and in particular, to a control system of a multi-gesture interactive touch steering wheel with vibration feedback.

### BACKGROUND

At present, as an important man-machine interaction control center of vehicles, multi-functional steering wheel key switches integrate multimedia control and instrument cluster information center control, as well as opening and adjustment of intelligent-driving-related functions. The key switch is basically a physical key, which has developed from an early analog output to a digital switch with LIN communication. The present invention describes a digital touch switch supporting pressing, sliding, special gestures, handwriting, etc., and adopting CAN communication, and having vibration feedback. The digital touch switch can effectively solve a problem of lack of mechanical stroke touch feedback, through deep integration of hardware and software, so as to significantly improve touch experience, and provide users with an efficient, safe and comfortable experience, especially for driving scenarios.

Multi-functional steering wheel key switches have more and more functions, can provide interactive experience, have a sense of technology and fashion, and can improve safety. Following contents need to be considered.
1. Existing steering wheel key switches on market are limited in number and single in function, and cannot be multiplexed.
2. Existing steering wheel key switches on market are single in interactive manners. Only pressing is supported, while sliding and special gestures are not supported. Stroke space needs to be reserved for an entity switch for pressing.
3. Considering pursue of quality and a sense of technology and fashion, is a steering wheel touch panel switch or a liquid crystal touch panel switch without a mechanical stroke sufficient in visual feedback and sound feedback? Is it safe?
4. Is there a feedback manner that can well integrate animation and sound so as to enhance user feeling?
Document 1 (US20190102082A1) discloses a touch-sensitive alphanumeric user interface for a vehicle. The touch-sensitive alphanumeric user interface includes a touchpad, a touchpad interface unit, a display interface unit and a display. The touchpad is integrated in a steering wheel of the vehicle and obtains coordinates of a trajectory performed by a finger of a user of the vehicle. The touchpad interface unit determines that a finger movement, identified from the first coordinates, is an arcuate movement, and based on the determination, issues arcuate movement instructions to the display interface unit. The display interface unit renders a visualization of alphanumeric choices, arranged in a circular pattern, determines a selected alphanumeric choice from the alphanumeric choices, based on the arcuate movement instructions, and renders the selected alphanumeric choice to be highlighted. The display, which is spatially separate from the touchpad, displays the rendered visualization of the alphanumeric choices and of the selected alphanumeric choice.

### SUMMARY

A purpose of the present invention is to provide a control system of a multi-gesture interactive steering wheel with vibration feedback, so as to solve one or more of the above defects in related arts.

The purpose of the present invention can be achieved through the following solution. The invention is set out in the appended set of claims 1-6. The embodiments which are described hereinafter but are not encompassed by the wording of the claims are only considered as useful examples for understanding the invention.

A control system of a multi-gesture interactive touch steering wheel with vibration feedback, including an integrated entertainment host, where the integrated entertainment host is connected with an interface interaction module and a touch steering wheel switch module, where:
the touch steering wheel switch module is configured to collect a touch coordinate of pressing or sliding, and send the touch coordinate to the integrated entertainment host;
the integrated entertainment host is configured to receive the touch coordinate, and analyse the touch coordinate with reference to an HMI interface interaction scenario displayed by the interface interaction module to generate an interface interaction change instruction, and send the interface interaction change instruction to the corresponding interface interaction module to display a corresponding interface recognition rendering result through the interface interaction module, and at a same time, send a vibration feedback instruction to the touch steering wheel switch module, to cause the touch steering wheel switch module to generate a corresponding vibration feedback logic;
the interface interaction module is configured to display the corresponding interface recognition rendering result.

Further, the interface interaction module includes a head-up display, an instrument cluster screen and a central control screen, where the head-up display, the instrument cluster screen and the central control screen are communicatively connected to the integrated entertainment host via different communication protocols respectively.

Further, the communication protocols include: a CAN HS-500kb/s communication protocol for transmitting a serial communication protocol bus at 500kb/s, used to transmit coordinates and control signals between a steering wheel control and the integrated entertainment host; a GMSL-2.5Gbit/s communication protocol for transmitting a serial communication protocol bus at 2.5Gbit/s, used to transmit video, audio and control signals between the integrated entertainment host, an instrument and the head-up display; and a GMSL2-6Gbit/s communication protocol for transmitting a serial communication protocol bus at 6Gbit/s, used to transmit video and control signals between the integrated entertainment host and the central control screen.

Further, the touch steering wheel switch module includes a steering wheel touch panel, and a pressure sensor and a vibration motor provided inside the steering wheel touch panel, where:
the steering wheel touch panel is configured to receive and collect the touch coordinate corresponding to different interaction operation actions;
the pressure sensor is configured to trigger vibration feedback when a pressure on the steering wheel touch panel varies to reach a preset threshold under different scenarios;
the vibration motor is configured to vibrate according to the corresponding vibration feedback logic.

Further, the vibration feedback logic includes: a short-press tactile vibration feedback logic, a long-press tactile vibration feedback logic, an invalid-press tactile vibration feedback logic, a sliding and special gesture tactile vibration feedback logic, and a handwriting tactile vibration feedback logic, where:
the short-press tactile vibration feedback logic specifically includes: first, when a pressure value received by the pressure sensor varies from 0 to a preset threshold X, the vibration motor is triggered to vibrate once; and then, when the pressure value received by the pressure sensor reduces to X-2, the vibration motor is triggered to vibrate once again;
the long-press tactile vibration feedback logic specifically includes: first, when a pressure value received by the pressure sensor varies from 0 to a preset threshold X, the vibration motor is triggered to vibrate once; and then when the integrated entertainment host determines a single-time of or multiple times of activation events, the vibration motor is correspondingly triggered to vibrate once or keep vibrating; finally, when the pressure value received by the pressure sensor reduces to X-2, the vibration motor is triggered to vibrate once again;
the invalid-press tactile vibration feedback logic specifically includes: the integrated entertainment host determines that a user is operating in an invalid vibration scenario, and a vibration instruction is sent to cause the vibration motor in the steering wheel touch panel to vibrate;
the sliding and special gesture tactile vibration feedback logic specifically includes: based on a relative coordinate between a start position and a release position of finger-sliding on the steering wheel touch panel, the integrated entertainment host determines and recognizes as a sliding operation and triggers the vibration motor to vibrate; or when a special gesture trajectory operation is performed by a finger on the steering wheel touch panel, the integrated entertainment host determines and recognizes as a special gesture and triggers the vibration motor to vibrate;
the handwriting tactile vibration feedback logic specifically includes: based on a relative coordinate between a start position and a release position of handwriting on the steering wheel touch panel, the integrated entertainment host determines and recognizes as a handwriting operation and triggers the vibration motor to vibrate.

The present invention further provides a control method of a touch steering wheel based on the control system of the multi-gesture interactive touch steering wheel with vibration feedback, including:
acquiring a touch coordinate of pressing or sliding on a touch steering wheel switch module;
analysing, by an integrated entertainment host according to the touch coordinate, with reference to an HMI interface interaction scenario displayed by an interface interaction module, to generate an interface interaction change instruction, and sending the interface interaction change instruction to the corresponding interface interaction module to display a corresponding interface recognition rendering result through the interface interaction module, and at a same time, sending a vibration feedback instruction to the touch steering wheel switch module, to cause the touch steering wheel switch module to generate a corresponding vibration feedback logic.

Further, in the control method of the touch steering wheel, the touch steering wheel switch module includes a steering wheel touch panel, and a pressure sensor and a vibration motor provided inside the steering wheel touch panel, where:
the steering wheel touch panel is configured to receive and collect the touch coordinate corresponding to different interaction operation actions;
the pressure sensor is configured to trigger vibration feedback when a pressure on the steering wheel touch panel varies to reach a preset threshold under different scenarios;
the vibration motor is configured to vibrate according to the corresponding vibration feedback logic.

Further, in the control method of the touch steering wheel, the interface interaction module includes a head-up display, an instrument cluster screen and a central control screen, where the head-up display, the instrument cluster screen and the central control screen are communicatively connected to the integrated entertainment host via different communication protocols respectively; where the communication protocols include: a CAN HS-500kb/s communication protocol for transmitting a serial communication protocol bus at 500kb/s, used to transmit coordinates and control signals between a steering wheel control and the integrated entertainment host; a GMSL-2.5Gbit/s communication protocol for transmitting a serial communication protocol bus at 2.5Gbit/s, used to transmit video, audio and control signals between the integrated entertainment host, an instrument and the head-up display; and a GMSL2-6Gbit/s communication protocol for transmitting a serial communication protocol bus at 6Gbit/s, used to transmit video and control signals between the integrated entertainment host and the central control screen.

Further, in the control method of the touch steering wheel, the vibration feedback logic includes: a short-press tactile vibration feedback logic, a long-press tactile vibration feedback logic, an invalid-press tactile vibration feedback logic, a sliding and special gesture tactile vibration feedback logic, and a handwriting tactile vibration feedback logic, where:
the short-press tactile vibration feedback logic specifically includes: first, when a pressure value received by the pressure sensor varies from 0 to a preset threshold X, the vibration motor is triggered to vibrate once; and then, when the pressure value received by the pressure sensor reduces to X-2, the vibration motor is triggered to vibrate once again;
the long-press tactile vibration feedback logic specifically includes: first, when a pressure value received by the pressure sensor varies from 0 to a preset threshold X, the vibration motor is triggered to vibrate once; and then when the integrated entertainment host determines a single-time of or multiple times of activation events, the vibration motor is correspondingly triggered to vibrate once or keep vibrating; finally, when the pressure value received by the pressure sensor reduces to X-2, the vibration motor is triggered to vibrate once again;
the invalid-press tactile vibration feedback logic specifically includes: the integrated entertainment host determines that a user is operating in an invalid vibration scenario, and a vibration instruction is sent to cause the vibration motor in the steering wheel touch panel to vibrate;
the sliding and special gesture tactile vibration feedback logic specifically includes: based on a relative coordinate between a start position and a release position of finger-sliding on the steering wheel touch panel, the integrated entertainment host determines and recognizes as a sliding operation and triggers the vibration motor to vibrate; or when a special gesture trajectory operation is performed by a finger on the steering wheel touch panel, the integrated entertainment host determines and recognizes as a special gesture and triggers the vibration motor to vibrate;
the handwriting tactile vibration feedback logic specifically includes: based on a relative coordinate between a start position and a release position of handwriting on the steering wheel touch panel, the integrated entertainment host determines and recognizes as a handwriting operation and triggers the vibration motor to vibrate.

The present invention further provides an automobile including the control system of the multi-gesture interactive touch steering wheel with vibration feedback.

Compared to related arts, the present invention has following advantages:
(1) The present intelligent control system of the touch steering wheel can instruct a vehicle to perform expected operations by pressing and multi-gestures. Through the touch steering wheel control panel, various operations can be performed in different interactive scenarios. Interactive manners include: short or long pressing of left and right steering wheel key switches, left and right sliding, up and down sliding, special gestures and handwriting functions. Integrated related functions include not only driving-related functions such as adjustments of height of the steering wheel, exterior rear-view mirror, a head-up display, but also adjustments of multimedia, air conditioning, voice, telephone, navigation and intelligent driving. Feedback manners include tactile vibration feedback, visual feedback and sound feedback. Iterative increase of life-cycle functions is supported.
(2) The present invention expands functions of a physical key switches.
(3) Rich interactive manners. Tapping, long-press, left and right sliding, up and down sliding, inertia sliding, special gestures are supported, which brings a sense of fun and technology during operation.
(4) Handwriting is supported, and song names, address book names, and navigation destinations can be searched to in a more convenient and faster manner.
(5) Compared with existing physical key switches, the present invention enhances splash-proof, water-proof and dust-proof performance of the steering wheel control switch because there is no physical gap.
(6) Different vibration intensities are used to replace previous pressing, so as to make experience more subtle.
(7) For different interface elements (filling block/progress bar, switch/slider), when a user performs a successful interaction, with generation of a sound and a completely synchronized vibration thereof, the user at the moment of successful interaction with it, which will instantly bring the user with a kind of mental ecstasy.
(8) The tactile vibration feedback of the present invention strengthens and supplements visual and auditory effect, and can improve sensory experience of users.
(9) The steering wheel touch panel of the present invention supports iterative increase of functions in a full life cycle.

### BRIEF DESCRIPTION OF THE DRAWINGS

In order to describe a technical solution of embodiments of the present invention more clearly, drawings that need to be used in the embodiments will be briefly introduced. It should be understood that the following drawings only show some embodiments of the present invention, which should not be regarded as limitations on the scope. For those of ordinary skills in the art, other related drawings can be obtained according to these drawings without making creative effort.
FIG. 1 is a network topology diagram of a system in an embodiment of the present invention.
FIG. 2 is a logic block diagram of a system in an embodiment of the present invention.
FIG. 3 is a schematic diagram of a short-press tactile vibration feedback logic in an embodiment of the present invention, where FIG. 3(a) is a schematic diagram of a short-press event, and FIG. 3(b) is a schematic exploded diagram of a short-press tactile feedback.
FIG. 4 is a schematic diagram of a long-press tactile vibration feedback logic in an embodiment of the present invention, where FIG. 4(a) is a schematic diagram of a long-press event, and FIG. 4(b) is a schematic exploded diagram of a long-press tactile feedback.
FIG. 5 is a schematic diagram of an invalid-press tactile vibration feedback logic in an embodiment of the present invention, where FIG. 5(a) is a schematic diagram of an invalid-press event, FIG. 5(b) is a schematic diagram of a song list, and FIG. 5(c) is a schematic exploded diagram of an invalid-press tactile feedback.
FIG. 6 is a schematic diagram of a sliding and special gestures tactile vibration feedback logic in an embodiment of the present invention, where FIG. 6(a) is a schematic diagram of a sliding and special gestures event, and FIG. 6(b) is a schematic exploded diagram of a sliding and special gestures tactile feedback.

### DETAILED DESCRIPTION

In the following, the technical solution in embodiments of the present invention will be clearly and completely described with reference to the accompanying drawings. Obviously, the described embodiments are a part of the embodiments of the present invention, but not all of the embodiments. Based on the embodiments in the present invention, all other embodiments obtained by those of ordinary skills in the art without making creative efforts should belong to the scope of protection of the present invention.

Therefore, the following detailed description of the embodiments of the present invention provided in the accompanying drawings is not intended to limit the scope of the present invention, but merely represents selected embodiments of the present invention. Based on the embodiments in the present invention, all other embodiments obtained by those of ordinary skills in the art without making creative efforts should belong to the scope of protection of the present invention.

It should be noted that similar numerals and letters indicate similar items in the following drawings, so once an item is defined in one drawing, it does not need to be further defined and described in subsequent drawings.

In the description of the present invention, it should be noted that orientation or position relationship indicated by the terms "center", "upper", "lower", "left", "right", "vertical", "horizontal", "inside" and "outside" is based on the orientation or position relationship shown in the accompanying drawings, or the orientation or position relationship that the product of the present invention is usually placed when used, which are only for the convenience of describing the present invention and simplifying the description, and does not indicate or imply that the referred apparatuses or elements must have a specific orientation, or be constructed and operated in a specific orientation, so it cannot be understood as limitations on the present invention. In addition, the terms "first", "second" and "third" are only used to distinguish descriptions and cannot be understood as indicating or implying relative importance.

In addition, the terms "horizontal" and "vertical" do not mean that components are required to be absolutely horizontal or overhanging, but may be slightly inclined. For example, "horizontal" only means that its direction is more horizontal than "vertical", which does not mean that the structure must be completely horizontal, but can be slightly inclined.

In the description of the present invention, it should also be noted that the terms "set", "install", "connect to" and "connect with" should be broadly understood, for example, they can be fixed, detachable or integrally connected, or can be a mechanical connection or an electrical connection; or can be directly connected or be indirectly connected through an intermediate medium, or can be connected inside two elements. For those of ordinary skills in the art, specific meanings of the above terms in the present invention can be understood in specific situations.

For characteristics of the steering wheel key switches of the existing automobile types such as limited number of keys and single functions, the present invention provides a steering wheel touch panel (LCD screen/glass, composite material/in-mold insert injection, the same below), which supports various operations in different interactive scenarios, and supports not only pressing and sliding, but also a handwriting function.

An exist steering wheel key is single in interaction manner, and the physical switch needs to be pressed hard. The steering wheel touch panel provided by the present invention can solve the problem of lack of mechanical stroke space, and has rich interaction manners, supports tapping, long-press, left and right sliding, up and down sliding and inertia sliding, and has a sense of fun and technology during operation; and at the same time, has tactile vibration feedback, which can provide real tactile feedback to fingertips.

A pressure sensor is arranged under the steering wheel touch panel. One, two or more pressure sensors can be arranged under one panel, and a number of the pressure sensors is not limited herein. The pressure sensor is configured to distinguish pressing or sliding. When a user presses the touch panel, a vibration feedback is triggered when a pressure increases from low to high to reach a preset threshold; and when the touch panel is released, a vibration feedback is triggered when a pressure reduces from high to low to reach a preset threshold.

According to the present invention, the steering wheel touch panel detects a touch point or a sliding area to transmit coordinates to an integrated entertainment host, and the integrated entertainment host analyses the received coordinates with reference to a current HMI (Human Machine Interface) scenario, and controls a corresponding operation, and at a same time, sends a vibration feedback instruction, to cause a vibration motor in the steering wheel touch panel to vibrate.

A linear motor in the steering wheel touch panel of the present invention can provide vibration selection with three different intensities, namely, light vibration, moderate vibration and heavy vibration, which can be configured by a user on a central control screen. At the same time, a release vibration feedback of the steering wheel touch panel of the present invention can be selected whether to use it or not, that is, a: press vibration only, b: press vibration+release vibration, which can be configured by a user on the central control screen. The steering wheel touch panel of the present invention supports iterative increase of functions in a full life cycle.

### Specific embodiments

### 1) Network topology diagram of a system:

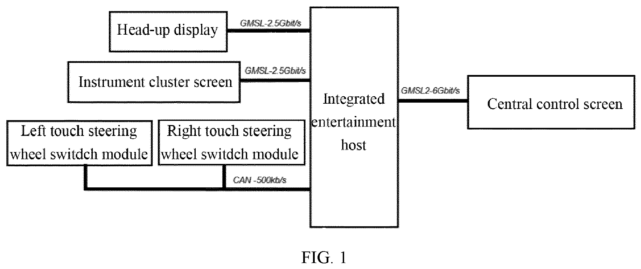

Based on a principle of scenario vibration feedback: as shown in the network topology diagram of the system shown in FIG. 1, left and right touch steering wheel switch modules send pressing or sliding touch coordinates to an integrated entertainment host through a CAN bus, and the integrated entertainment host analyses received coordinate values with reference to an interactive scenario in a current head-up display and an instrument cluster screen, and controls the corresponding operation, and at the same time sends a vibration feedback instruction to cause a vibration motor in a steering wheel touch panel to vibrate.

Specific technique details of the system network are as follows:
the integrated entertainment host controls a central control screen, a head-up display and an instrument cluster screen in a vehicle, and adjustments are performed through left and right touch steering wheel switch modules.

CAN HS-500kb/s: for transmitting a serial communication protocol bus at 500kb/s, mainly used to transmit control signals.

GMSL-2.5Gbit/s: for transmitting a serial communication protocol bus at 2.5Gbit/s, mainly used to transmit video, audio and control signals.

GMSL2-6Gbit/s: for transmitting a serial communication protocol bus at 6Gbit/s, mainly used to transmit video, audio and control signals.

APP: third-party application.

UART: universal serial data bus, used for asynchronous communication.

IPCL protocol: the IPCL protocol is usually used to convert CAN signals into character string signals. After being analysed by Carservice or App, the above character string signals are converted into text or image interfaces for users to select and use, thus converting original CAN signals into text or images that users can understand.

QNX: a micro-kernel real-time operating system.

Android: a free and open source operating system based on Linux kernel (excluding GNU components).

Software Buffer: buffer of a software.

### 2) Logic block diagram of the system

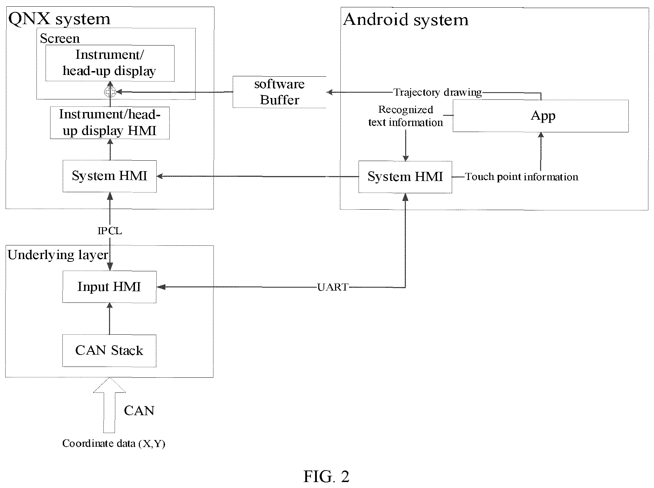

Recognitions of tapping, up or down sliding, left or right sliding are completed in an underlying system of the integrated entertainment host. A concept of an algorithm is: position coordinates of "pressing" or "releasing" on the steering wheel touch panel are recognized, and a relative coordinate of the two positions is calculated to determine whether to tap or slide and the direction of sliding, through the left dashed box in FIG. 2, Input HMI receives the tapping coordinate or the sliding coordinates and transmits recognized information to System HMI in a QNX system through the IPCL protocol, and the System HMI sends processed data to an HMI module of an instrument or a head-up display, and finally renders a corresponding recognition result on a corresponding display.

For trajectories recognition of handwriting and special gestures, an input method provided by an APP on an Android terminal on a right side of FIG. 2 is used. Input HMI does not recognize original touch point sent by a steering wheel control, but sends it to the System HMI of Android through UART. The APP acquires handwritten information through a customized interface and recognizes the handwritten information, and recognized text information is sent back to a QNX terminal through the System HMI. Trajectory information is directly rendered on the software Buffer, and the QNX terminal acquires the recognized text information and renders it on channels of the instrument and the head-up display. The trajectory information on the software Buffer will be displayed in a superimposed manner on a software channel and the instrument or the head-up display channel through shared storage, and will be presented on the instrument or the head-up display together.

### 3) Implementation of tactile feedback

### 1. Short-press tactile feedback

Mainly used on ON/OFF, confirm or short-press adjustment of a certain function, such as voice activate/cancel, music media play/pause, fold/open adjustment on an exterior rear-view mirror. Short-press tactile feedback: vibrate on pressing for once, vibrate on releasing for once.

A short-press event is determined by the steering wheel touch panel according to a pressure value on itself. A specific implementation is as follows.

Upon pressing by a user, when a pressure of the panel increases from 0 N (Newton) to a preset threshold X N, vibration is triggered for once.

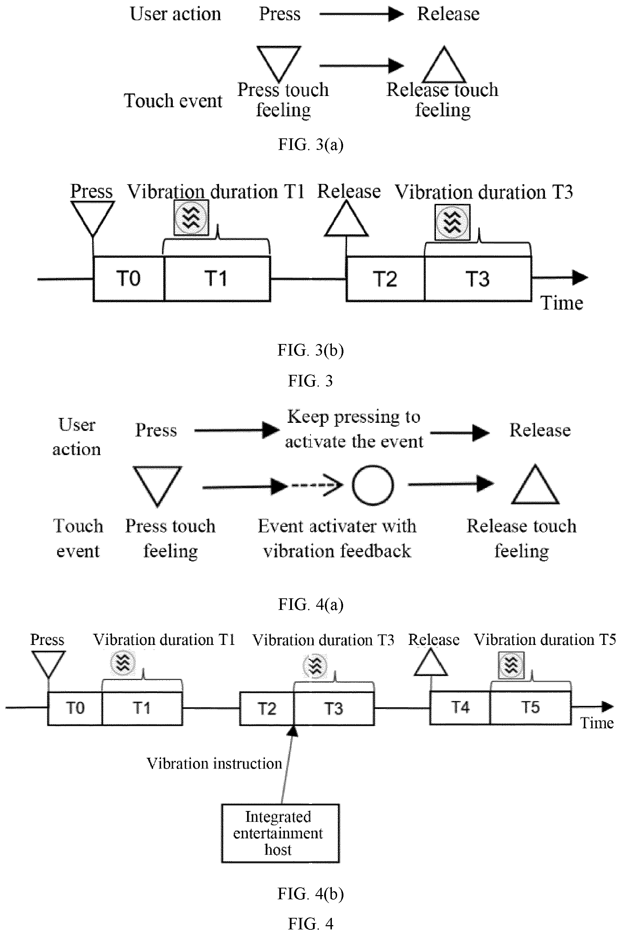

Upon releasing by a user, when a pressure of the panel reduces to a preset threshold (X-2) N, vibration is triggered for once, as shown in FIG. 3(a).

Short-press tactile feedback: when a user presses at a moment T0, a pressure sensor in the touch panel receives variation of a pressure value from low to high. When the pressure value increases from 0 N to a preset threshold X N, a vibration motor in the touch panel starts to vibrate. After the vibration lasts for a duration T1, the user starts to release. When the pressure value reduces to a preset threshold (X-2) N, and the reducing process lasts for a duration T2, the vibration motor in the touch panel starts to vibrate again, and a vibration duration is T3, as shown in FIG. 3(b).

### 2. Long-press tactile feedback

The long-press tactile feedback is mainly divided into two categories: single-time event activation and multiple-time event activation during the long press process. The single-time event activation is mainly used on functions such as activation of an intelligent driving function, and reset and adjustment of the head-up display. A fill block/progress bar is on an interaction interface, and when a user presses and keeps until the fill block/progress bar is filled up, a function is activated with vibration feedback; the multiple-time event activation is mainly used on adjustments on a position of the exterior rear-view mirror, a position of the head-up display, a position of a steering wheel column, as shown in FIG. 4(a).

Long-press single-time event activation tactile feedback: vibrate on pressing for once, vibrate on event activation for once, and vibrate on releasing for once.

Long-press multiple-time event activation tactile feedback: vibrate on pressing for once, keep vibrating on event activation until releasing, and vibrate on releasing for once.

Press touch feeling and release touch feeling of the long-press event are same as those of the short-press event, which are determined by the steering wheel touch panel according to a pressure value variation of its own. But in the long-press event, when the pressing is kept, the single-time and multiple-time activation event are both determined by the integrated entertainment host, and a vibration instruction is sent to the touch panel, as shown in FIG. 4(b), a vibration duration T3 is triggered by the vibration instruction sent by the integrated entertainment host.

### 3. Invalid-press tactile feedback

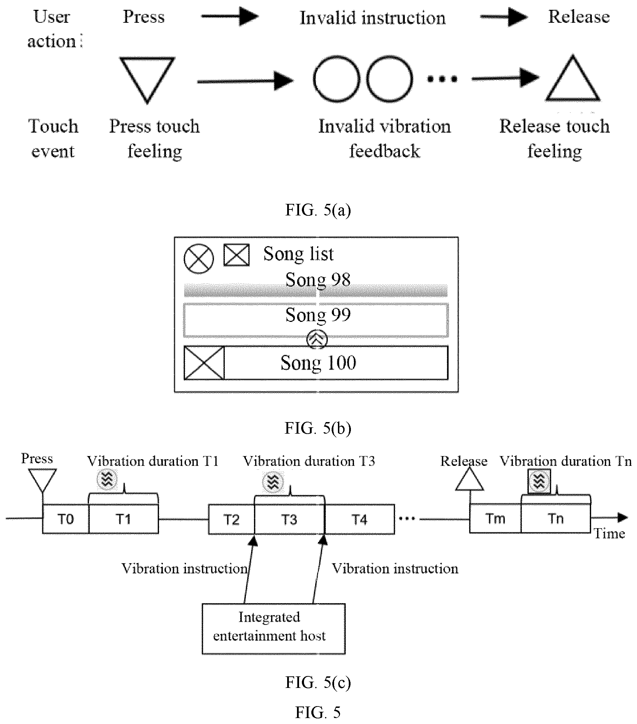

Different from a normal pressing, when a user operates the touch panel, as shown in FIG. 5(a), when an invalid event occurs, vibration feedback is triggered to inform the user of operation on "wrong" information. As shown in FIG. 5(b), a song list has already reached a bottom, and when a "down" key is further pressed, "invalid" operation vibration feedback will be triggered.

The invalid event is recognized and triggered by the integrated entertainment host based on a current HMI interface, and the touch panel vibrates. The process of the invalid event is basically same as that of the long-press tactile feedback. The difference is that the long-press event-trigger activation has a long period, and the function is activated with one vibration feedback when the fill block/progress bar is filled up; and when an invalid vibration event occurs during user pressing and the integrated entertainment host recognizes invalid vibration, the integrated entertainment host will keep sending feedback instructions to the touch panel to cause the touch panel keep vibrating until the user releases, as shown in FIG. 5(c).

### 4. Sliding and special gestures tactile feedback

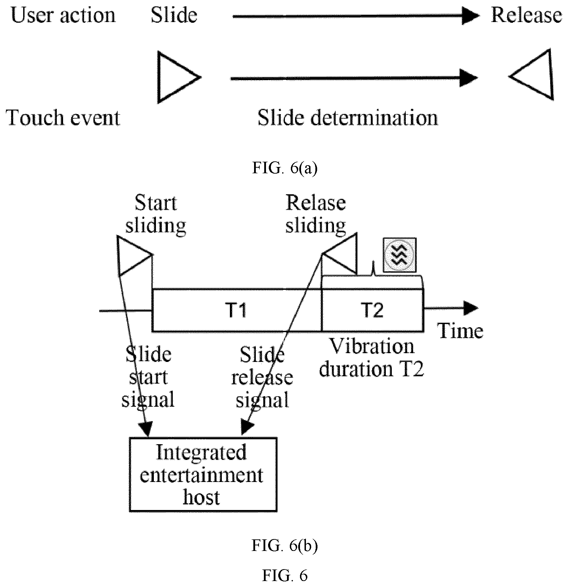

The sliding and special gestures tactile feedback are exploded as shown in FIG. 6(a). As mentioned above, a sliding recognition is determined by calculating a relative coordinate between two positions of a start point and an end point of the sliding, and when vibration feedback is performed when the instruction is valid. When a user operates a special gesture, such as finger gestures of "∘", "√", "Z", "N", a corresponding operation is triggered when the gesture is finished, and the touch panel performs vibration feedback.

For a sliding event and a special gesture event, an underlying system of the integrated entertainment host will receive continuous coordinates of the steering wheel control, that is, when a valid instruction is determined in FIG. 6(b), the integrated entertainment host will send the vibration instruction to the touch panel, and a vibration duration is T2, as shown in FIG. 6(b).

### 5. Handwriting tactile feedback

A handwriting tactile feedback is similar to sliding.

The above is only specific embodiments of the present invention, but the protection scope of the present invention is not limited herein. Therefore, the protection scope of the present invention should be based on the protection scope of the claims.

## Claims

1. A control system of a multi-gesture interactive touch steering wheel with vibration feedback, comprising an integrated entertainment host, wherein the integrated entertainment host is connected with an interface interaction module and a touch steering wheel switch module, wherein:
the touch steering wheel switch module is configured to collect a touch coordinate of pressing or sliding, and send the touch coordinate to the integrated entertainment host;
the integrated entertainment host is configured to receive the touch coordinate, and analyze the touch coordinate with reference to an HMI interface interaction scenario displayed by the interface interaction module to generate an interface interaction change instruction, and send the interface interaction change instruction to the corresponding interface interaction module to display a corresponding interface recognition rendering result through the interface interaction module, and at a same time, send a vibration feedback instruction to the touch steering wheel switch module, to cause the touch steering wheel switch module to generate a corresponding vibration feedback logic;
the interface interaction module is configured to display the corresponding interface recognition rendering result;
wherein the touch steering wheel switch module comprises a steering wheel touch panel, and a pressure sensor and a vibration motor provided inside the steering wheel touch panel, wherein:
the steering wheel touch panel is configured to receive and collect the touch coordinate corresponding to different interaction operation actions;
the pressure sensor is configured to trigger vibration feedback when a pressure on the steering wheel touch panel varies to reach a preset threshold under different scenarios;
the vibration motor is configured to vibrate according to the corresponding vibration feedback logic;
**characterized in that**: the vibration feedback logic comprises**:**
a short-press tactile vibration feedback logic, a long-press tactile vibration feedback logic, an invalid-press tactile vibration feedback logic, a sliding and special gesture tactile vibration feedback logic, and a handwriting tactile vibration feedback logic, wherein:
the short-press tactile vibration feedback logic specifically comprises: first, when a pressure value received by the pressure sensor varies from 0 to a preset threshold X, the vibration motor is triggered to vibrate once; and then, when the pressure value received by the pressure sensor reduces to X-2, the vibration motor is triggered to vibrate once again;
the long-press tactile vibration feedback logic specifically comprises: first, when a pressure value received by the pressure sensor varies from 0 to a preset threshold X, the vibration motor is triggered to vibrate once; and then when the integrated entertainment host determines a single-time of or multiple times of activation events, the vibration motor is correspondingly triggered to vibrate once or keep vibrating; finally, when the pressure value received by the pressure sensor reduces to X-2, the vibration motor is triggered to vibrate once again;
the invalid-press tactile vibration feedback logic specifically comprises: the integrated entertainment host determines that a user is operating in an invalid vibration scenario, and a vibration instruction is sent to cause the vibration motor in the steering wheel touch panel to vibrate;
the sliding and special gesture tactile vibration feedback logic specifically comprises: based on a relative coordinate between a start position and a release position of finger-sliding on the steering wheel touch panel, the integrated entertainment host determines and recognizes as a sliding operation and triggers the vibration motor to vibrate; or when a special gesture trajectory operation is performed by a finger on the steering wheel touch panel, the integrated entertainment host determines and recognizes as a special gesture and triggers the vibration motor to vibrate;
the handwriting tactile vibration feedback logic specifically comprises: based on a relative coordinate between a start position and a release position of handwriting on the steering wheel touch panel, the integrated entertainment host determines and recognizes as a handwriting operation and triggers the vibration motor to vibrate.

2. The control system of the multi-gesture interactive touch steering wheel with vibration feedback according to claim 1, wherein the interface interaction module comprises a head-up display, an instrument cluster screen and a central control screen, wherein the head-up display, the instrument cluster screen and the central control screen are communicatively connected to the integrated entertainment host via different communication protocols respectively.

3. The control system of the multi-gesture interactive touch steering wheel with vibration feedback according to claim 2, wherein the communication protocols comprise:
a CAN HS-500kb/s communication protocol for transmitting a serial communication protocol bus at 500kb/s, used to transmit coordinates and control signals between a steering wheel control and the integrated entertainment host;
a GMSL-2.5Gbit/s communication protocol for transmitting a serial communication protocol bus at 2.5Gbit/s, used to transmit video, audio and control signals between the integrated entertainment host, an instrument and the head-up display; and
a GMSL2-6Gbit/s communication protocol for transmitting a serial communication protocol bus at 6Gbit/s, used to transmit video and control signals between the integrated entertainment host and the central control screen.

4. A control method of a touch steering wheel based on the control system of the multi-gesture interactive touch steering wheel with vibration feedback according to any one of claims 1-3, comprising:
acquiring a touch coordinate of pressing or sliding on the touch steering wheel switch module;
analyzing, by the integrated entertainment host according to the touch coordinate, with reference to an HMI interface interaction scenario displayed by the interface interaction module, to generate an interface interaction change instruction, and sending the interface interaction change instruction to the corresponding interface interaction module to display a corresponding interface recognition rendering result through the interface interaction module, and at a same time, sending a vibration feedback instruction to the touch steering wheel switch module, to cause the touch steering wheel switch module to generate a corresponding vibration feedback logic;
wherein the touch steering wheel switch module comprises a steering wheel touch panel, and a pressure sensor and a vibration motor provided inside the steering wheel touch panel, wherein:
the steering wheel touch panel is configured to receive and collect the touch coordinate corresponding to different interaction operation actions;
the pressure sensor is configured to trigger vibration feedback when a pressure on the steering wheel touch panel varies to reach a preset threshold under different scenarios;
the vibration motor is configured to vibrate according to the corresponding vibration feedback logic;
**characterized in that**: the vibration feedback logic comprises:
a short-press tactile vibration feedback logic, a long-press tactile vibration feedback logic, an invalid-press tactile vibration feedback logic, a sliding and special gesture tactile vibration feedback logic, and a handwriting tactile vibration feedback logic, wherein:
the short-press tactile vibration feedback logic specifically comprises: first, when a pressure value received by the pressure sensor varies from 0 to a preset threshold X, the vibration motor is triggered to vibrate once; and then, when the pressure value received by the pressure sensor reduces to X-2, the vibration motor is triggered to vibrate once again;
the long-press tactile vibration feedback logic specifically comprises: first, when a pressure value received by the pressure sensor varies from 0 to a preset threshold X, the vibration motor is triggered to vibrate once; and then when the integrated entertainment host determines a single-time of or multiple times of activation events, the vibration motor is correspondingly triggered to vibrate once or keep vibrating; finally, when the pressure value received by the pressure sensor reduces to X-2, the vibration motor is triggered to vibrate once again;
the invalid-press tactile vibration feedback logic specifically comprises: the integrated entertainment host determines that a user is operating in an invalid vibration scenario, and a vibration instruction is sent to cause the vibration motor in the steering wheel touch panel to vibrate;
the sliding and special gesture tactile vibration feedback logic specifically comprises: based on a relative coordinate between a start position and a release position of finger-sliding on the steering wheel touch panel, the integrated entertainment host determines and recognizes as a sliding operation and triggers the vibration motor to vibrate; or when a special gesture trajectory operation is performed by a finger on the steering wheel touch panel, the integrated entertainment host determines and recognizes as a special gesture and triggers the vibration motor to vibrate;
the handwriting tactile vibration feedback logic specifically comprises: based on a relative coordinate between a start position and a release position of handwriting on the steering wheel touch panel, the integrated entertainment host determines and recognizes as a handwriting operation and triggers the vibration motor to vibrate.

5. The control method of the touch steering wheel based on the control system of the multi-gesture interactive touch steering wheel with vibration feedback according to claim 4, wherein the interface interaction module comprises a head-up display, an instrument cluster screen and a central control screen, wherein the head-up display, the instrument cluster screen and the central control screen are communicatively connected to the integrated entertainment host via different communication protocols respectively; wherein the communication protocols comprise:
a CAN HS-500kb/s communication protocol for transmitting a serial communication protocol bus at 500kb/s, used to transmit coordinates and control signals between a steering wheel control and the integrated entertainment host;
a GMSL-2.5Gbit/s communication protocol for transmitting a serial communication protocol bus at 2.5Gbit/s, used to transmit video, audio and control signals between the integrated entertainment host, an instrument and the head-up display; and
a GMSL2-6Gbit/s communication protocol for transmitting a serial communication protocol bus at 6Gbit/s, used to transmit video and control signals between the integrated entertainment host and the central control screen.

6. An automobile, comprising the control system of the multi-gesture interactive touch steering wheel with vibration feedback according to any one of claims 1-3.

## Patentansprüche

1. Steuerungssystem für ein interaktives Mehrgesten-Touch-Lenkrad mit Vibrationsrückmeldung, umfassend einen integrierten Host für Unterhaltungsfunktionen, wobei der integrierte Host für Unterhaltungsfunktionen mit einem Schnittstelleninteraktionsmodul und einem Touch-Lenkrad-Schaltmodul verbunden ist, wobei:
das Touch-Lenkrad-Schaltmodul ausgelegt ist, um eine Berührungskoordinate eines Drückens oder Wischens zu erfassen und die Berührungskoordinate an den integrierten Host für Unterhaltungsfunktionen zu senden;
der integrierte Host für Unterhaltungsfunktionen ausgelegt ist, um die Berührungskoordinate zu empfangen und die Berührungskoordinate unter Bezugnahme auf ein von dem Schnittstelleninteraktionsmodul angezeigtes MMS-Schnittstelleninteraktionsszenario zu analysieren, um eine Schnittstelleninteraktionsänderungsanweisung zu generieren, und die Schnittstelleninteraktionsänderungsanweisung an das entsprechende Schnittstelleninteraktionsmodul zu senden, um ein entsprechendes Schnittstellenerkennungsdarstellungergebnis durch das Schnittstelleninteraktionsmodul anzeigen zu lassen und gleichzeitig eine Vibrationsrückmeldungsanweisung an das Touch-Lenkrad-Schaltmodul zu senden, um zu bewirken, dass das Touch-Lenkrad-Schaltmodul eine entsprechende Vibrationsrückmeldungslogik generiert;
das Schnittstelleninteraktionsmodul ausgelegt ist, um das entsprechende Schnittstellenerkennungsdarstellungsergebnis anzuzeigen,
wobei das Touch-Lenkrad-Schaltmodul ein Lenkrad-Touchpanel umfasst und ein Drucksensor und ein Vibrationsmotor innerhalb des Lenkrad-Touchpanels vorgesehen sind, wobei:
das Lenkrad-Touchpanel ausgelegt ist, um die Berührungskoordinate entsprechend unterschiedlichen Interaktionsvorgangshandlungen zu empfangen und zu erfassen;
der Drucksensor ausgelegt ist, um eine Vibrationsrückmeldung auszulösen, wenn ein Druck auf das Lenkrad-Touchpanel variiert und einen voreingestellten Schwellenwert in unterschiedlichen Szenarien erreicht;
der Vibrationsmotor ausgelegt ist, um gemäß der entsprechenden Vibrationsrückmeldungslogik zu vibrieren,
**dadurch gekennzeichnet, dass** die Vibrationsrückmeldungslogik Folgendes umfasst: eine
taktile Kurzdruck-Vibrationsrückmeldungslogik, eine taktile Langdruck-Vibrationsrückmeldungslogik, eine taktile Ungültig-Druck-Vibrationsrückmeldungslogik, eine taktile Vibrationsrückmeldungslogik für Wisch- und Sondergesten sowie eine taktile Handschrift-Vibrationsrückmeldungslogik, wobei:
die taktile Kurzdruck-Vibrationsrückmeldungslogik insbesondere Folgendes umfasst: Wenn ein von dem Drucksensor empfangener Druckwert von 0 bis zu einem voreingestellten Schwellenwert X variiert, wird zunächst der Vibrationsmotor ausgelöst, um einmal zu vibrieren, und dann, wenn der von dem Drucksensor empfangene Druckwert auf X-2 sinkt, wird der Vibrationsmotor ausgelöst, um noch einmal zu vibrieren;
die taktile Langdruck-Vibrationsrückmeldungslogik insbesondere Folgendes umfasst: Wenn ein von dem Drucksensor empfangener Druckwert von 0 bis zu einem voreingestellten Schwellenwert X variiert, wird zunächst der Vibrationsmotor ausgelöst, um einmal zu vibrieren, und dann, wenn der integrierte Host für Unterhaltungsfunktionen ein einmaliges oder mehrmalige Aktivierungsereignisse bestimmt, wird der Vibrationsmotor entsprechend ausgelöst, um einmal zu vibrieren oder anhaltend zu vibrieren; wenn schließlich der von dem Drucksensor empfangene Druckwert auf X-2 sinkt, wird der Vibrationsmotor ausgelöst, um noch einmal zu vibrieren;
die taktile Ungültig-Druck-Vibrationsrückmeldungslogik Folgendes umfasst: Der integrierte Host für Unterhaltungsfunktionen bestimmt, dass ein Nutzer in einem ungültigen Vibrationsszenario arbeitet, und eine Vibrationsanweisung wird gesendet, um zu bewirken, dass der Vibrationsmotor in dem Lenkrad-Touchpanel vibriert;
die taktile Vibrationsrückmeldungslogik für Wischen und Sondergesten insbesondere Folgendes umfasst: Basierend auf einer relativen Koordinate zwischen einer Startposition und einer Freigabeposition von Fingerwischen auf dem Lenkrad-Touchpanel bestimmt und erkennt der integrierte Host für Unterhaltungsfunktionen diese als einen Wischvorgang und löst das Vibrieren des Vibrationsmotors aus, oder, wenn ein Vorgang mit einem Sondergestenbewegungsverlauf von einem Finger auf dem Lenkrad-Touchpanel durchgeführt wird, bestimmt und erkennt der integrierte Host für Unterhaltungsfunktionen diesen als eine Sondergeste und löst das Vibrieren des Vibrationsmotors aus;
die taktile Handschrift-Vibrationsrückmeldungslogik insbesondere Folgendes umfasst: Basierend auf einer relativen Koordinate zwischen einer Startposition und einer Freigabeposition von Handschreiben auf dem Lenkrad-Touchpanel bestimmt und erkennt der integrierte Host für Unterhaltungsfunktionen diese als einen Handschriftvorgang und löst das Vibrieren des Vibrationsmotors aus.

2. Steuerungssystem für das interaktive Mehrgesten-Touch-Lenkrad mit Vibrationsrückmeldung nach Anspruch 1, wobei das Schnittstelleninteraktionsmodul ein Head-up-Display, einen Kombiinstrument-Bildschirm und einen zentralen Steuerungsbildschirm umfasst, wobei das Head-up-Display, der Kombiinstrument-Bildschirm und der zentrale Steuerungsbildschirm jeweils über unterschiedliche Kommunikationsprotokolle kommunizierend mit dem integrierten Host für Unterhaltungsfunktionen verbunden sind.

3. Steuerungssystem für das interaktive Mehrgesten-Touch-Lenkrad mit Vibrationsrückmeldung nach Anspruch 2, wobei die Kommunikationsprotokolle Folgendes umfassen:
ein CAN-HS-500-kb/s-Kommunikationsprotokoll zum Übertragen eines seriellen Kommunikationsprotokollbusses bei 500 kb/s, das verwendet wird, um Koordinaten und Steuersignale zwischen einer Lenkradsteuerung und dem integrierten Host für Unterhaltungsfunktionen zu übertragen;
ein GMSL-2,5-Gbit/s-Kommunikationsprotokoll zum Übertragen eines seriellen Kommunikationsprotokollbusses bei 2,5 Gbit/s, das verwendet wird, um Video-, Audio- und Steuersignale zwischen dem integrierten Host für Unterhaltungsfunktionen, einem Instrument und dem Head-up-Display zu übertragen, und
ein GMSL2-6-Gbit/s-Kommunikationsprotokoll zum Übertragen eines seriellen Kommunikationsprotokollbusses bei 6 Gbit/s, das verwendet wird, um Video- und Steuersignale zwischen dem integrierten Host für Unterhaltungsfunktionen und dem zentralen Steuerungsbildschirm zu übertragen.

4. Steuerungsverfahren für ein Touch-Lenkrad basierend auf dem Steuerungssystem für das interaktive Mehrgesten-Touch-Lenkrad mit Vibrationsrückmeldung nach einem der Ansprüche 1-3, umfassend:
Erlangen einer Berührungskoordinate eines Drückens oder Wischens auf dem Touch-Lenkrad-Schaltmodul;
Analysieren gemäß der Berührungskoordinate unter Bezugnahme auf ein von dem Schnittstelleninteraktionsmodul angezeigtes MMS-Schnittstelleninteraktionsszenario durch den integrierten Host für Unterhaltungsfunktionen, um eine Schnittstelleninteraktionsänderungsanweisung zu generieren, und Senden der Schnittstelleninteraktionsänderungsanweisung an das entsprechende Schnittstelleninteraktionsmodul, um ein entsprechendes Schnittstellenerkennungsdarstellungsergebnis durch das Schnittstelleninteraktionsmodul anzeigen zu lassen, und gleichzeitiges Senden einer Vibrationsrückmeldungsanweisung an das Touch-Lenkrad-Schaltmodul, um zu bewirken, dass das Touch-Lenkrad-Schaltmodul eine entsprechende Vibrationsrückmeldungslogik generiert;
wobei das Touch-Lenkrad-Schaltmodul ein Lenkrad-Touchpanel umfasst und ein Drucksensor und ein Vibrationsmotor innerhalb des Lenkrad-Touchpanels vorgesehen sind, wobei:
das Lenkrad-Touchpanel ausgelegt ist, um die Berührungskoordinate entsprechend unterschiedlichen Interaktionsvorgangshandlungen zu empfangen und zu erfassen;
der Drucksensor ausgelegt ist, um eine Vibrationsrückmeldung auszulösen, wenn ein Druck auf das Lenkrad-Touchpanel variiert und einen voreingestellten Schwellenwert in unterschiedlichen Szenarien erreicht;
der Vibrationsmotor ausgelegt ist, um gemäß der entsprechenden Vibrationsrückmeldungslogik zu vibrieren,
**dadurch gekennzeichnet, dass** die Vibrationsrückmeldungslogik Folgendes umfasst: eine
taktile Kurzdruck-Vibrationsrückmeldungslogik, eine taktile Langdruck-Vibrationsrückmeldungslogik, eine taktile Ungültig-Druck-Vibrationsrückmeldungslogik, eine taktile Vibrationsrückmeldungslogik für Wisch- und Sondergesten sowie eine taktile Handschrift-Vibrationsrückmeldungslogik, wobei:
die taktile Kurzdruck-Vibrationsrückmeldungslogik insbesondere Folgendes umfasst: Wenn ein von dem Drucksensor empfangener Druckwert von 0 bis zu einem voreingestellten Schwellenwert X variiert, wird zunächst der Vibrationsmotor ausgelöst, um einmal zu vibrieren, und dann, wenn der von dem Drucksensor empfangene Druckwert auf X-2 sinkt, wird der Vibrationsmotor ausgelöst, um noch einmal zu vibrieren;
die taktile Langdruck-Vibrationsrückmeldungslogik insbesondere Folgendes umfasst: Wenn ein von dem Drucksensor empfangener Druckwert von 0 bis zu einem voreingestellten Schwellenwert X variiert, wird zunächst der Vibrationsmotor ausgelöst, um einmal zu vibrieren, und dann, wenn der integrierte Host für Unterhaltungsfunktionen ein einmaliges oder mehrmalige Aktivierungsereignisse bestimmt, wird der Vibrationsmotor entsprechend ausgelöst, um einmal zu vibrieren oder anhaltend zu vibrieren; wenn schließlich der von dem Drucksensor empfangene Druckwert auf X-2 sinkt, wird der Vibrationsmotor ausgelöst, um noch einmal zu vibrieren;
die taktile Ungültig-Druck-Vibrationsrückmeldungslogik Folgendes umfasst: Der integrierte Host für Unterhaltungsfunktionen bestimmt, dass ein Nutzer in einem ungültigen Vibrationsszenario arbeitet, und eine Vibrationsanweisung wird gesendet, um zu bewirken, dass der Vibrationsmotor in dem Lenkrad-Touchpanel vibriert;
die taktile Vibrationsrückmeldungslogik für Wischen und Sondergesten insbesondere Folgendes umfasst: Basierend auf einer relativen Koordinate zwischen einer Startposition und einer Freigabeposition von Fingerwischen auf dem Lenkrad-Touchpanel bestimmt und erkennt der integrierte Host für Unterhaltungsfunktionen diese als einen Wischvorgang und löst das Vibrieren des Vibrationsmotors aus, oder, wenn ein Vorgang mit einem Sondergestenbewegungsverlauf von einem Finger auf dem Lenkrad-Touchpanel durchgeführt wird, bestimmt und erkennt der integrierte Host für Unterhaltungsfunktionen diesen als eine Sondergeste und löst das Vibrieren des Vibrationsmotors aus;
die taktile Handschrift-Vibrationsrückmeldungslogik insbesondere Folgendes umfasst: Basierend auf einer relativen Koordinate zwischen einer Startposition und einer Freigabeposition von Handschreiben auf dem Lenkrad-Touchpanel bestimmt und erkennt der integrierte Host für Unterhaltungsfunktionen diese als einen Handschriftvorgang und löst das Vibrieren des Vibrationsmotors aus.

5. Steuerungsverfahren für das Touch-Lenkrad basierend auf dem Steuerungssystem für das interaktive Mehrgesten-Touch-Lenkrad mit Vibrationsrückmeldung nach Anspruch 4,
wobei das Schnittstelleninteraktionsmodul ein Head-up-Display, einen Kombiinstrument-Bildschirm und einen zentralen Steuerungsbildschirm umfasst, wobei das Head-up-Display, der Kombiinstrument-Bildschirm und der zentrale Steuerungsbildschirm jeweils über unterschiedliche Kommunikationsprotokolle kommunizierend mit dem integrierten Host für Unterhaltungsfunktionen verbunden sind, wobei die Kommunikationsprotokolle Folgendes umfassen:
ein CAN-HS-500-kb/s-Kommunikationsprotokoll zum Übertragen eines seriellen Kommunikationsprotokollbusses bei 500 kb/s, das verwendet wird, um Koordinaten und Steuersignale zwischen einer Lenkradsteuerung und dem integrierten Host für Unterhaltungsfunktionen zu übertragen;
ein GMSL-2,5-Gbit/s-Kommunikationsprotokoll zum Übertragen eines seriellen Kommunikationsprotokollbusses bei 2,5 Gbit/s, das verwendet wird, um Video-, Audio- und Steuersignale zwischen dem integrierten Host für Unterhaltungsfunktionen, einem Instrument und dem Head-up-Display zu übertragen, und
ein GMSL2-6-Gbit/s-Kommunikationsprotokoll zum Übertragen eines seriellen Kommunikationsprotokollbusses bei 6 Gbit/s, das verwendet wird, um Video- und Steuersignale zwischen dem integrierten Host für Unterhaltungsfunktionen und dem zentralen Steuerungsbildschirm zu übertragen.

6. Automobil, umfassend das Steuerungssystem für das interaktive Mehrgesten-Touch-Lenkrad mit Vibrationsrückmeldung nach einem der Ansprüche 1-3.

## Revendications

1. Système de commande d'un volant tactile interactif multi-geste avec retour haptique, comprenant un hôte de divertissement intégré, dans lequel l'hôte de divertissement intégré est connecté à un module d'interaction d'interface et à un module de commutation de volant tactile, dans lequel :
le module de commutation de volant tactile est configuré pour capturer une coordonnée tactile de pression ou de glissement, et envoyer la coordonnée tactile à l'hôte de divertissement intégré ;
l'hôte de divertissement intégré est configuré pour recevoir la coordonnée tactile, et analyser la coordonnée tactile en référence à un scénario d'interaction d'interface IHM affiché par le module d'interaction d'interface pour générer une instruction de changement d'interaction d'interface, et envoyer l'instruction de changement d'interaction d'interface au module d'interaction d'interface correspondant pour afficher un résultat de rendu de reconnaissance d'interface correspondant à travers le module d'interaction d'interface, et en même temps, envoyer une instruction de retour haptique au module de commutation de volant tactile, pour amener le module de commutation de volant tactile à générer une logique de retour haptique correspondante ;
le module d'interaction d'interface est configuré pour afficher le résultat de rendu de reconnaissance d'interface correspondant ;
dans lequel le module de commutation de volant tactile comprend un panneau tactile de volant, et un capteur de pression et un moteur de vibration disposés à l'intérieur du panneau tactile de volant, dans lequel :
le panneau tactile de volant est configuré pour recevoir et capturer la coordonnée tactile correspondant à des actions d'opération d'interaction différentes ;
le capteur de pression est configuré pour déclencher une retour haptique lorsqu'une pression sur le panneau tactile de volant varie pour atteindre un seuil prédéfini dans des scénarios différents ;
le moteur de vibration est configuré pour vibrer selon la logique de retour haptique correspondante ;
**caractérisé en ce que** : la logique de retour haptique comprend :
une logique de retour haptique tactile de pression courte, une logique de retour haptique tactile de pression longue, une logique de retour haptique tactile de pression invalide, une logique de retour haptique tactile de geste coulissant et spécial, et une logique de retour haptique tactile d'écriture manuscrite, dans lequel :
la logique de retour haptique tactile de pression courte comprend spécifiquement : d'abord, lorsqu'une valeur de pression reçue par le capteur de pression varie de 0 à un seuil prédéfini X, le moteur de vibration est déclenché pour vibrer une fois ; puis, lorsque la valeur de pression reçue par le capteur de pression diminue jusqu'à X-2, le moteur de vibration est déclenché pour vibrer à nouveau ;
la logique de retour haptique tactile de pression longue comprend spécifiquement : d'abord, lorsqu'une valeur de pression reçue par le capteur de pression varie de 0 à un seuil prédéfini X, le moteur de vibration est déclenché pour vibrer une fois ; puis lorsque l'hôte de divertissement intégré détermine des événements d'activation uniques ou en plusieurs fois, le moteur de vibration est déclenché de manière correspondante pour vibrer une fois ou vibrer en continu ; enfin, lorsque la valeur de pression reçue par le capteur de pression diminue jusqu'à X-2, le moteur de vibration est déclenché pour vibrer à nouveau ;
la logique de retour haptique tactile de pression invalide comprend spécifiquement : l'hôte de divertissement intégré détermine qu'un utilisateur est dans un scénario de vibration invalide, et une instruction de vibration est envoyée pour amener le moteur de vibration dans le panneau tactile de volant à vibrer ;
la logique de retour haptique tactile de geste coulissant et spécial comprend spécifiquement : sur la base d'une coordonnée relative entre une position de départ et une position de détachement de glissement de doigt sur le panneau tactile de volant, l'hôte de divertissement intégré détermine et reconnaît comme une opération de glissement et déclenche la vibration du moteur de vibration ; ou lorsqu'une opération de trajectoire de geste spéciale est effectuée par un doigt sur le panneau tactile de volant, l'hôte de divertissement intégré détermine et reconnaît comme un geste spécial et déclenche la vibration du moteur de vibration ;
la logique de retour haptique tactile d'écriture manuscrite comprend spécifiquement : sur la base d'une coordonnée relative entre une position de départ et une position de détachement d'écriture manuscrite sur le panneau tactile de volant, l'hôte de divertissement intégré détermine et reconnaît comme une opération d'écriture manuscrite et déclenche la vibration du moteur de vibration.

2. Système de commande du volant tactile interactif multi-geste avec retour haptique selon la revendication 1, dans lequel le module d'interaction d'interface comprend un affichage tête-haute, un écran d'instruments groupés et un écran de commande central, dans lequel l'affichage tête-haute, l'écran d'instruments groupés et l'écran de commande central sont respectivement connectés en communication à l'hôte de divertissement intégré par l'intermédiaire de différents protocoles de communication.

3. Système de commande du volant tactile interactif multi-geste avec retour haptique selon la revendication 2, dans lequel les protocoles de communication incluent :
un protocole de communication CAN HS-500 kb/s pour transmettre un bus de protocole de communication série à 500 kb/s, utilisé pour transmettre des coordonnées et des signaux de commande entre une commande de volant et l'hôte de divertissement intégré ;
un protocole de communication GMSL-2,5 Gbit/s pour transmettre un bus de protocole de communication série à 2,5 Gbit/s, utilisé pour transmettre des signaux vidéo, audio et de commande entre l'hôte de divertissement intégré, un instrument et l'affichage tête-haute ; et
un protocole de communication GMSL2-6 Gbit/s pour transmettre un bus de protocole de communication série à 6 Gbit/s, utilisé pour transmettre des signaux vidéo et de commande entre l'hôte de divertissement intégré et l'écran de commande central.

4. Procédé de commande d'un volant tactile basé sur le système de commande du volant tactile interactif multi-geste avec retour haptique selon l'une quelconque des revendications 1-3, comprenant :
l'acquisition d'une coordonnée tactile de pression ou de glissement sur le module de commutation de volant tactile ;
l'analyse, par l'hôte de divertissement intégré en fonction de la coordonnée tactile, en référence à un scénario d'interaction d'interface IHM affiché par le module d'interaction d'interface, pour générer une instruction de changement d'interaction d'interface, et l'envoi de l'instruction de changement d'interaction d'interface au module d'interaction d'interface correspondant pour afficher un résultat de rendu de reconnaissance d'interface correspondant à travers le module d'interaction d'interface, et en même temps, l'envoi d'une instruction de retour haptique au module de commutation de volant tactile, pour amener le module de commutation de volant tactile à générer une logique de retour haptique correspondante ;
dans lequel le module de commutation de volant tactile comprend un panneau tactile de volant, et un capteur de pression et un moteur de vibration disposés à l'intérieur du panneau tactile de volant, dans lequel :
le panneau tactile de volant est configuré pour recevoir et capturer la coordonnée tactile correspondant à des actions d'opération d'interaction différentes ;
le capteur de pression est configuré pour déclencher une retour haptique lorsqu'une pression sur le panneau tactile de volant varie pour atteindre un seuil prédéfini dans des scénarios différents ;
le moteur de vibration est configuré pour vibrer selon la logique de retour haptique correspondante ;
**caractérisé en ce que** : la logique de retour haptique comprend :
une logique de retour haptique tactile de pression courte, une logique de retour haptique tactile de pression longue, une logique de retour haptique tactile de pression invalide, une logique de retour haptique tactile de geste coulissant et spécial, et une logique de retour haptique tactile d'écriture manuscrite, dans lequel :
la logique de retour haptique tactile de pression courte comprend spécifiquement : d'abord, lorsqu'une valeur de pression reçue par le capteur de pression varie de 0 à un seuil prédéfini X, le moteur de vibration est déclenché pour vibrer une fois ; puis, lorsque la valeur de pression reçue par le capteur de pression diminue jusqu'à X-2, le moteur de vibration est déclenché pour vibrer à nouveau ;
la logique de retour haptique tactile de pression longue comprend spécifiquement : d'abord, lorsqu'une valeur de pression reçue par le capteur de pression varie de 0 à un seuil prédéfini X, le moteur de vibration est déclenché pour vibrer une fois ; puis lorsque l'hôte de divertissement intégré détermine des événements d'activation uniques ou en plusieurs fois, le moteur de vibration est déclenché de manière correspondante pour vibrer une fois ou vibrer en continu ; enfin, lorsque la valeur de pression reçue par le capteur de pression diminue jusqu'à X-2, le moteur de vibration est déclenché pour vibrer à nouveau ;
la logique de retour haptique tactile de pression invalide comprend spécifiquement : l'hôte de divertissement intégré détermine qu'un utilisateur est dans un scénario de vibration invalide, et une instruction de vibration est envoyée pour amener le moteur de vibration dans le panneau tactile de volant à vibrer ;
la logique de retour haptique tactile de geste coulissant et spécial comprend spécifiquement : sur la base d'une coordonnée relative entre une position de départ et une position de détachement de glissement de doigt sur le panneau tactile de volant, l'hôte de divertissement intégré détermine et reconnaît comme une opération de glissement et déclenche la vibration du moteur de vibration ; ou lorsqu'une opération de trajectoire de geste spéciale est effectuée par un doigt sur le panneau tactile de volant, l'hôte de divertissement intégré détermine et reconnaît comme un geste spécial et déclenche la vibration du moteur de vibration ;
la logique de retour haptique tactile d'écriture manuscrite comprend spécifiquement : sur la base d'une coordonnée relative entre une position de départ et une position de détachement d'écriture manuscrite sur le panneau tactile de volant, l'hôte de divertissement intégré détermine et reconnaît comme une opération d'écriture manuscrite et déclenche la vibration du moteur de vibration.

5. Procédé de commande du volant tactile sur la base du système de commande du volant tactile interactif multi-geste avec retour haptique selon la revendication 4,
dans lequel le module d'interaction d'interface comprend un affichage tête-haute, un écran d'instruments groupés et un écran de commande central, dans lequel l'affichage tête-haute, l'écran d'instruments groupés et l'écran de commande central sont respectivement connectés en communication à l'hôte de divertissement intégré par l'intermédiaire de différents protocoles de communication ; dans lequel les protocoles de communication incluent :
un protocole de communication CAN HS-500 kb/s pour transmettre un bus de protocole de communication série à 500 kb/s, utilisé pour transmettre des coordonnées et des signaux de commande entre une commande de volant et l'hôte de divertissement intégré ;
un protocole de communication GMSL-2,5 Gbit/s pour transmettre un bus de protocole de communication série à 2,5 Gbit/s, utilisé pour transmettre des signaux vidéo, audio et de commande entre l'hôte de divertissement intégré, un instrument et l'affichage tête-haute ; et
un protocole de communication GMSL2-6 Gbit/s pour transmettre un bus de protocole de communication série à 6 Gbit/s, utilisé pour transmettre des signaux vidéo et de commande entre l'hôte de divertissement intégré et l'écran de commande central.

6. Automobile, comprenant le système de commande du volant tactile interactif multi-geste avec retour haptique selon l'une quelconque des revendications 1-3.
